Europäisches Patentamt

European Patent Office

Office européen des brevets

(19)

(11) Numéro de publication: **0 069 655**
**B2**

(12) **NOUVEAU FASCICULE DE BREVET EUROPEEN**

(45) Date de publication du nouveau fascicule du brevet: **05.09.90**

(51) Int. Cl.⁵: **H 02 H 3/33**

(21) Numéro de dépôt: **82401230.6**

(22) Date de dépôt: **01.07.82**

(54) **Dispositif de protection différentielle à haute sensibilité pour la détection de courants de défaut phase ou neutre à la terre.**

(30) Priorité: **06.07.81 FR 8113379**

(43) Date de publication de la demande:
**12.01.83 Bulletin 83/02**

(45) Mention de la délivrance du brevet:
**27.11.85 Bulletin 85/48**

(45) Mention de la decision concernant l'opposition:
**05.09.90 Bulletin 90/36**

(84) Etats contractants désignés:
**BE CH DE GB IT LI NL SE**

(56) Documents cités:
EP-A-0 016 458      DE-A-2 730 874
EP-A-0 035 120      DE-C-2 348 881
DE-A-2 555 221      FR-A-2 321 208
DE-A-2 555 302      US-A-3 710 190
DE-A-2 555 303

(73) Titulaire: **MERLIN GERIN**
**Rue Henri Tarze**
**F-38050 Grenoble Cédex (FR)**

(72) Inventeur: **Bernard, Georges**
**Merlin Gerin**
**F-38050 Grenoble Cedex (FR)**
Inventeur: **Marzocca, Joseph**
**Merlin Gerin**
**F-38050 Grenoble Cedex (FR)**
Inventeur: **Tournier, Emile**
**Merlin Gerin**
**F-38050 Grenoble Cedex (FR)**

(74) Mandataire: **Kern, Paul et al**
**Merlin Gerin Sce. Brevets 20, rue Henri Tarze**
**F-38050 Grenoble Cédex (FR)**

(56) Documents cités:
**Symposium Heidelberg, 1976, "Sichere Elektrizität durch elektrische Schutzschaltgeräte - Gegenwärtiger Stand und mögliche zukünftige Lösungen." organisé par BBC-STOTZ, Heidelberg, p.17**

**Le dossier contient des informations techniques présentées postérieurement au dépôt de la demande et ne figurant pas dans le présent fascicule.**

Courier Press, Leamington Spa, England.

## Description

L'invention concerne un dispositif de protection différentielle conforme au préambule de la revendication 1 ou de la revendication 2.

Les dispositifs de protection contre les courants de défaut à la terre utilisent généralement un transformateur homopolaire différentiel à noyau torique dont les enroulements primaires sont parcourus par les courants de conducteurs de l'installation électrique à protéger. L'enroulement secondaire fournit un signal de défaut différentiel lorsque la somme des courants parcourant les enroulements primaires n'est pas nulle. Ce signal est appliqué à la bobine de commande du relais de déclenchement d'un disjoncteur de protection.

Un dispositif électronique d'amplification peut être intercalé entre le transformateur homopolaire et le relais déclencheur pour fixer le seuil de déclenchement. Il est alors possible de détecter des défauts phase-terre de l'ordre de 10 mA.

L'utilisation d'un transformateur homopolaire présente néanmoins des inconvénients lorsqu'il s'agit de détecter des courants de défaut phase-terre continu ou à composante continue. On a remarqué que le seuil de déclenchement est affecté par la présence d'un courant ou d'une composante continue. Cette variation du seuil provoque une désensibilisation de la protection par tore à haute perméabilité. L'utilisation d'un tore spécial doté d'un matériau magnétique prédéterminé à cycle étroit et penché permet de pallier cet inconvénient. Il est également possible d'utiliser un tore classique dont l'enroulement secondaire est associé à un filtre de mise en forme qui permet de conserver un même seuil de déclenchement en régime de courant alternatif ou continu.

Selon les documents DE-A-2.555.302 et 2.555.303, un enroulement auxiliaire de prémagnétisation bobiné sur le tore, est alimenté en permanence par un signal alternatif d'un oscillateur dont la fréquence (1000 Hz par exemple) est grande par rapport à celle (50 Hz) du réseau. Selon le document DE-A-2555.303, l'enroulement secondaire du tore est branché à un redresseur, suivi d'un circuit RC et d'un discriminateur, ce dernier étant formé par un amplificateur électronique qui délivre un ordre de déclenchement lorsque la tension aux bornes du circuit RC diminue par rapport à une tension de référence de l'amplificateur. Le déclenchement intervient en cas d'apparition de courants de défauts alternatif ou continu, et la constante de temps du circuit RC correspond environ à 1 milliseconde, c'est à dire à la période du signal alternatif de l'oscillateur.

Le document DE-OS-2.730.874 décrit un dispositif de protection différentielle sensible à des courants de fuite alternatif et continu, et comprenant un multivibrateur connecté par l'intermédiaire d'une impédance de charge à l'enroulement secondaire d'un tore homopolaire. La variation de l'état de magnétisation du tore lors d'un défaut est contrôlée par un dispositif de surveillance du signal de sortie du multivibrateur, ledit signal étant appliqué à un circuit à seuil pilotant le relais de déclenchement.

Le document DE-OS-2.555.221 se rapporte à un dispositif de traitement de signal prélevé à l'enroulement secondaire d'un tore homopolaire, et appliqué à deux amplificateurs opérationnels de commande d'une bascule bistable Flip-Flop. En cas de défaut, la modification de l'intervalle de temps entre une tension de seuil positive, et une tension de seuil négative est analysée par le dispositif de traitement, lequel effectue un simple rapport d'impulsions. Le déclencheur déclenche lorsque la valeur de la tension aux bornes de condensateurs chargés par la bascule bistable 47 est inégale, suite à des temps de commutation différents de la bascule.

L'un des problèmes posés par ces dispositifs connus est celui de la dérive en température susceptible de faire varier la perméabilité du matériau du tore homopolaire. Cette modification de l'état magnétique du tore perturbe le signal de sortie de l'enroulement secondaire, et provoque alors un déséquilibre différentiel même en l'absence de défaut phase-terre continu ou alternatif. Il en résulte des déclenchements différentiels intempestifs.

Le deuxième problème est celui de l'absence de détection du défaut neutre à la terre. Ce type de défaut désensibilise et peut même aveugler totalement la protection différentielle.

La détection du défaut neutre à la terre en aval du système de détection de défaut s'effectue d'une manière classique au moyen de deux tores dont le premier est associé à un oscillateur à haute fréquence, qui induit un courant à haute fréquence dans la boucle constituée par le défaut neutre-terre, et dont le deuxième tore comprend l'enroulement secondaire de commande coopérant avec le circuit de déclenchement. Outre la nécessité de deux tores, ce dispositif n'est pas sensible à des courants de défaut phase-terre continu.

L'objet de l'invention consiste à réaliser un dispositif de protection différentielle à tore unique pouvant détecter en permanence une mise à la terre du neutre, et des courants de défaut phase-terre alternatif ou continu.

La solution à ce problème est stipulée dans les revendications 1 et 2. L'apparition d'un courant de défaut quelconque, notamment phase-terre alternatif et continu, ou une mise à la terre de neutre, entraîne une modification de l'état magnétique du tore unique et une diminution de la tension aux bornes du premier enroulement secondaire. Il en résulte une augmentation de la tension différentielle à la sortie du comparateur. Si cette tension différentielle dépasse un seuil prédéterminé, l'organe de commutation est débloqué et le relais provoque le déclenchement du disjoncteur.

Le circuit de traitement est subdivisé en deux voies, dont l'une détecte les défauts phase-terre avec compensation automatique de l'effet de dérive en température, et l'autre détecte le défaut neutre à la terre. Les deux voies sont connectées à un circuit logique de commande qui délivre l'ordre de déclenchement en cas d'apparition d'un quelconque défaut phase-terre ou neutre à la terre.

D'autres avantages et caractéristiques ressortiront plus clairement de l'exposé qui va suivre de divers modes de réalisation de l'invention, donnés à titre d'exemples non limitatifs et représentés aux dessins annexés, dans lesquels:

la figure 1 est une vue schématique du dispositif de protection différentielle à tore unique;

la figure 2 est une vue partielle d'une variante de la figure 1 dont le tore est équipé de deux enroulements secondaires;

les figures 3 et 4 représentent deux modes de réalisation du dispositif selon la figure 1;

la figure 5 montre un circuit synoptique détecteur de défaut phase-terre à tore unique insensible à l'effet de température;

la figure 6 représente un mode de réalisation du circuit de la figure 5;

la figure 7 montre le circuit synoptique selon l'invention d'un dispositif à tore unique insensible à la température pour la détection du neutre à la terre et d'un défaut phase-terre alternatif ou continu;

la figure 8 représente l'allure des tensions en divers points du dispositif selon la nature du défaut:

- Fig. 8a tension $U_2$ délivrée par le générateur G à fréquence F fixe supérieure à celle du réseau;

- Fig. 8b: tension $U_1$ aux bornes de l'enroulement secondaire $L_1$ du tore avant et après un défaut phase-terre continu;

- Fig. 8c: tension différentielle $\Delta U = U_1 - U_2$ suite au défaut phase-terre continu;

- Fig. 8d: tension différentielle $\Delta U$ suite à un défaut phase-terre alternatif à 50 Hz;

- Fig. 8e: tension différentielle $\Delta U$ suite à un défaut neutre à la terre.

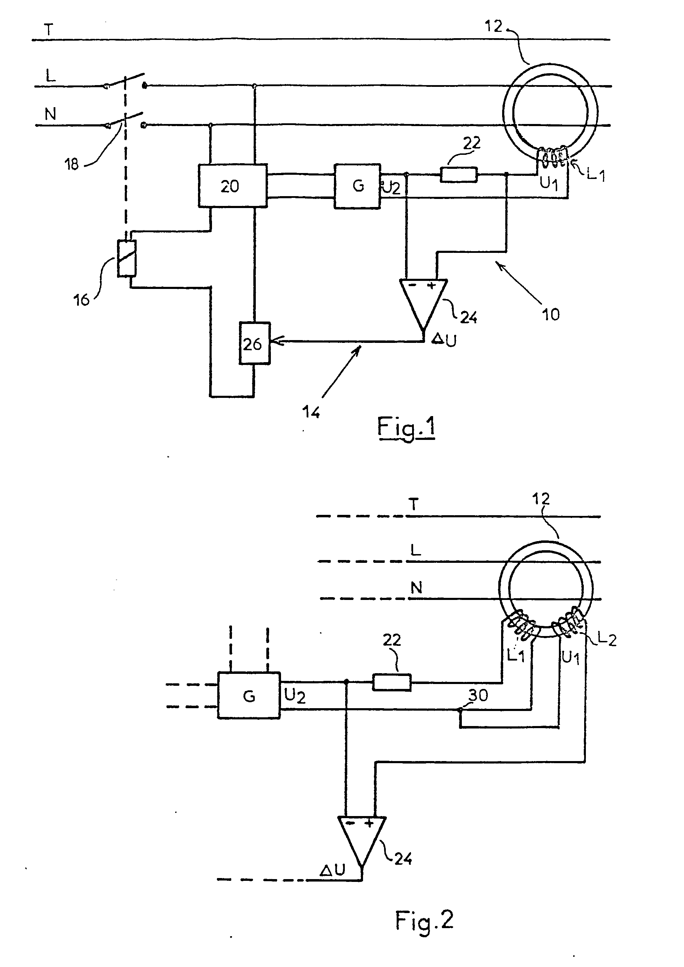

Sur la figure 1 est représenté un dispositif de protection différentielle 10 à haute sensibilité pour la détection de défauts à la terre dans un réseau alternatif monophasé à basse tension à conducteurs de phase L, de neutre N et de terre T. Le dispositif 10 est intercalé entre la source principale d'alimentation et le récepteur et comporte un tore 12 ferromagnétique traversé par les conducteurs de phase L et de neutre N, qui forment les enroulements primaires du tore 12. Un enroulement secondaire $L_1$ est bobiné sur le tore 12 et est relié à un circuit de mesure et de traitement 14 susceptible de délivrer un ordre de déclenchement à un relais 16 d'actionnement d'un disjoncteur 18 de protection. Ce dernier est branché sur les conducteurs L et N en amont du tore 12 en direction de la source d'alimentation pour interrompre l'alimentation de l'installation en cas de défaut à la terre détecté par le transformateur différentiel à tore 12. Le conducteur de neutre N est connecté à la terre en amont du disjoncteur 18.

Le circuit de mesure et de traitement 14 est alimenté par une source auxiliaire 20 à sécurité positive prise sur la tension alternative du réseau de distribution. L'enroulement secondaire $L_1$ du tore 12 est branché à un générateur G par l'intermédiaire d'une résistance 22. Le générateur G est formé par un oscillateur sinusoïdal à tension constante $U_2$ et à fréquence fixe F supérieure à la fréquence 50 Hz du réseau de distribution. L'oscillateur est alimenté par la source auxiliaire 20 et fonctionne automatiquement lors de la fermeture du disjoncteur 18, de manière à délivrer un courant pilote haute fréquence dans l'enroulement secondaire $L_1$ du tore 12. La valeur de la résistance 22 est suffisamment grande pour imposer un courant pilote constant.

Un comparateur 24 à seuil constitué par un amplificateur différentiel est branché aux bornes du générateur G et de l'enroulement secondaire $L_1$ du tore 12. La sortie du comparateur 24 commande un organe de commutation 26 relié en série avec le relais 16 et la source auxiliaire 20.

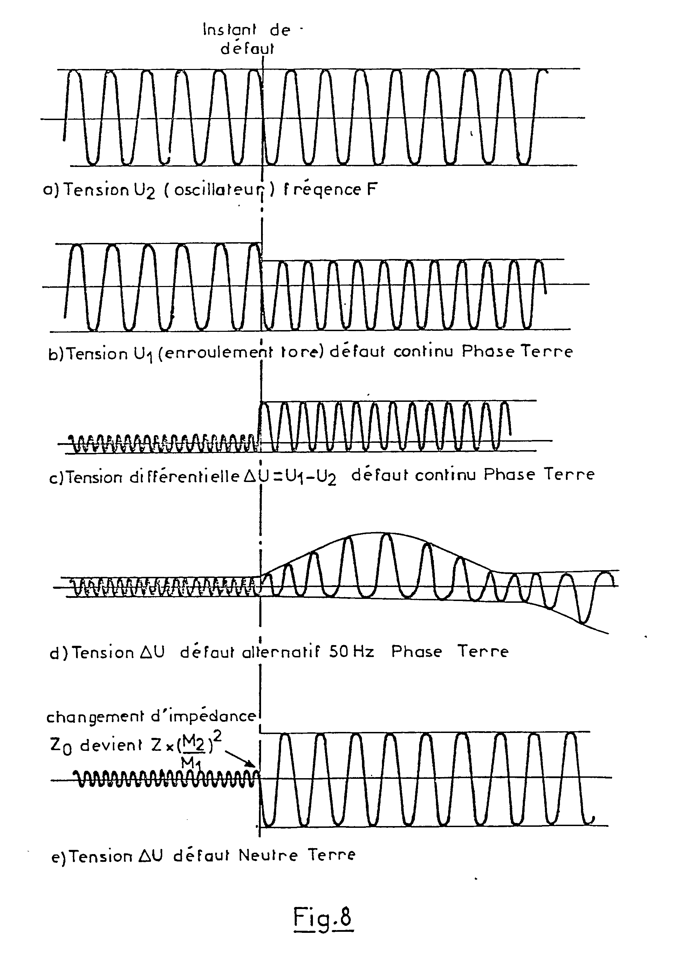

Le fonctionnement du dispositif de protection différentielle selon la fig. 1 est le suivant, la fig. 8 indiquant schématiquement la forme des signaux en différents points du circuit.

Le générateur G à haute fréquence génère en permanence un courant pilote d'intensité constante dans l'enroulement secondaire $L_1$ du tore 12. Le comparateur 24 compare les tensions $U_2$ et $U_1$ aux bornes du générateur G et de l'enroulement $L_1$, la tension $U_2$ fixe servant de référence (fig. 8a). En l'absence de défaut, les tensions $U_2$ et $U_1$ sont sensiblement égales et le comparateur 24 indique une différence très faible ou nulle incapable de provoquer la conduction de l'organe de commutation 26 et l'excitation du relais 16.

L'apparition d'un défaut entraîne une modification de l'état magnétique du tore 12 et une diminution de la tension $U_1$ aux bornes de l'enroulement $L_1$. Il en résulte une augmentation de la tension différentielle $\Delta U = U_1 - _2$ à la sortie du comparateur 24. Si cette tension différentielle dépasse un seuil prédéterminé l'organe de commutation 26 est débloqué et le relais 16 provoque le déclenchement du disjoncteur 18.

En cas de défaut phase-terre continu ou à composante continue, le courant de défaut continu, qui traverse le tore provoque une modification de la perméabilité entraînant une diminution de la tension $U_1$ aux bornes de l'enroulement $L_1$ (voir fig. 8b), et une augmentation de la tension différentielle $\Delta U$ (fig. 8c).

En cas de défaut phase-terre alternatif, un courant de défaut alternatif 50 Hz traverse le tore 12 qui par induction électromagnétique sur l'enroulement $L_1$ assure une modulation en amplitude du signal de fréquence F donné par le générateur G. La tension différentielle $\Delta U$ (fig. 8d) augmente à l'apparition du défaut alternatif mais est modulée en amplitude par le signal de défaut à 50 Hz.

En cas de défaut neutre-terre résultant d'une mise accidentelle du conducteur neutre N à la terre en aval du tore 12, l'impédance de l'enroulement secondaire $L_1$ du tore 12 varie entraînant une diminution de la tension $U_1$. La détection du défaut neutre-terre par variation d'impédance de l'enroulement $L_1$ du tore 12 provoque à la sortie du comparateur 24 une tension différentielle $\Delta U$ sinusoîdale (fig. 8e) de fréquence F et dont l'amplitude dépasse le seuil de déclenchement du disjoncteur 18 qui s'ouvre.

On remarque qu'un transformateur différentiel à tore 12 unique est suffisant pour détecter les trois types de défauts à la terre grâce au comparateur 24 qui repère la variation de la tension $U_1$ aux bornes de l'enroulement $L_1$ en la comparant à une tension de référence $U_2$ délivrée par le générateur G à haute fréquence associé au tore 12.

La fig. 2 est une variante du dispositif de protection différentielle selon la fig 1, le tore 12 étant doté de deux enroulements secondaires $L_1$ et $L_2$ distincts. L'enroulement $L_1$ est connecté au générateur G à haute fréquence en série avec la résistance 22 tandis que l'enroulement $L_2$ est branché à une entrée du comparateur 24 et à un point commun 30 de raccordement de l'enroulement $L_1$. Le comparateur 24 compare alors l'amplitude de la tension $U_1$ aux bornes de l'enroulement $L_2$ par rapport à celle de la tension de référence $U_2$ du générateur G. La suite du fonctionnement est similaire à celui du dispositif de la fig. 1.

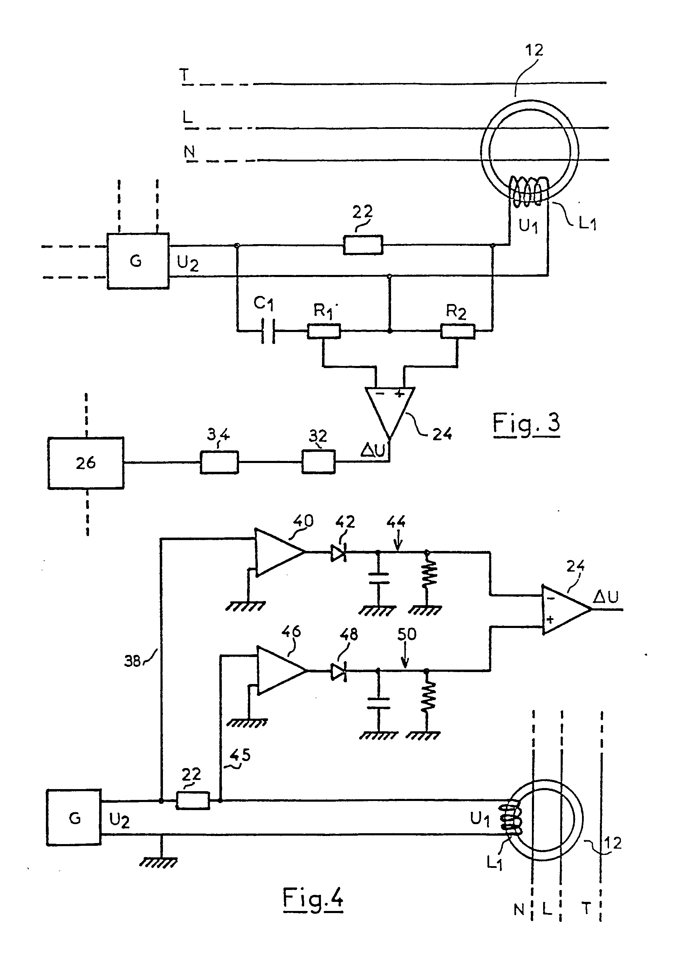

La fig. 3 correspond au montage de la fig. 1, avec un enroulement secondaire $L_1$ unique. La comparaison des tensions $U_2$ du générateur G et $U_1$ de l'enroulement $L_1$ s'effectue en instantané grâce un circuit $R_1C_1$ série branché entre le générateur G et une entrée du comparateur 24. Une résistance $R_2$ est reliée entre l'enroulement $L_1$ et l'autre entrée du comparateur 24, les deux résistances $R_1$ et $R_2$ étant réglables pour ajuster en l'absence de défaut les tensions d'entrée du comparateur 24. La sortie du comparateur 24 est branchée à un filtre 32 passe haut connecté à l'organe de commutation 26 par l'intermédiaire d'un circuit à seuil 34. Le fonctionnement du dispositif de la fig. 3 est identique à celui de la fig. 1. La fig. 4 est une variante de la fig. 1 dans laquelle la comparaison des tensions $U_2$ de référence du générateur et $U_1$ de l'enroulement $L_1$ du tore 12 s'effectue dans le comparateur 24 après redressement pour ne pas avoir à tenir compte des déphasages et des formes d'ondes. Le générateur G est connecté par un conducteur de liaison 38 à un adaptateur d'impédance 40 en série avec un redresseur 42 et un circuit de filtrage 44 à résistance capacité, relié à l'une des entrées du comparateur 24. L'enroulement secondaire $L_1$ du tore 12 est branché de la même manière par un conducteur 45 à l'autre entrée du comparateur 24 par l'intermédiaire d'un circuit série comprenant un adaptateur d'impédance 46, un redresseur 48 et un filtre 50. Au repos la différence entre les tensions $U_2$ et $U_1$ redressées est nulle, et le comparateur 24 ne délivre aucun signal. En présence d'un défaut à la terre, la tension $U_1$ diminue, et la sortie du comparateur 24 indique une tension différentielle $\Delta U$ de commande.

On remarque dans les dispositifs des fig. 1 à 4 que l'amplitude de la tension $U_1$ de l'enroulement secondaire $L_1$ ou $L_2$ du tore 12 peut être affectée par la température du tore 12. La dérive en température est en effet assez importante pour des défauts phase-terre continu ou alternatif dès que la température du matériau magnétique du tore 12 atteint 40°C. Cette dérive est liée à la variation de la perméabilité du matériau avec la température provoquant une variation correspondante de la tension $U_1$ aux bornes de l'enroulement $L_1$ du tore 12 alors que la tension de référence $U_2$ du générateur G reste constante. L'équilibre différentiel est ainsi détruit même en l'absence de défaut, et risque d'engendrer des déclenchements intempestifs. L'utilisation d'un matériau prédéterminé à perméabilité sensiblement constante en fonction de la température permettrait d'éviter ces déclenchements intempestifs.

Un autre moyen de réduction de la dérive en température consiste à modifier le circuit de traitement du signal prélevé aux bornes de l'enroulement $L_1$ du tore 12. On observe sur la fig. 8b qu'un défaut phase-terre continu n'affecte qu'une seule des deux alternances de la tension $U_1$, notamment l'alternance positive, alors que l'amplitude de l'alternance négative reste constante avant et après l'instant du défaut. Il en est de même pour un défaut phase-terre alternatif à 50 Hz.

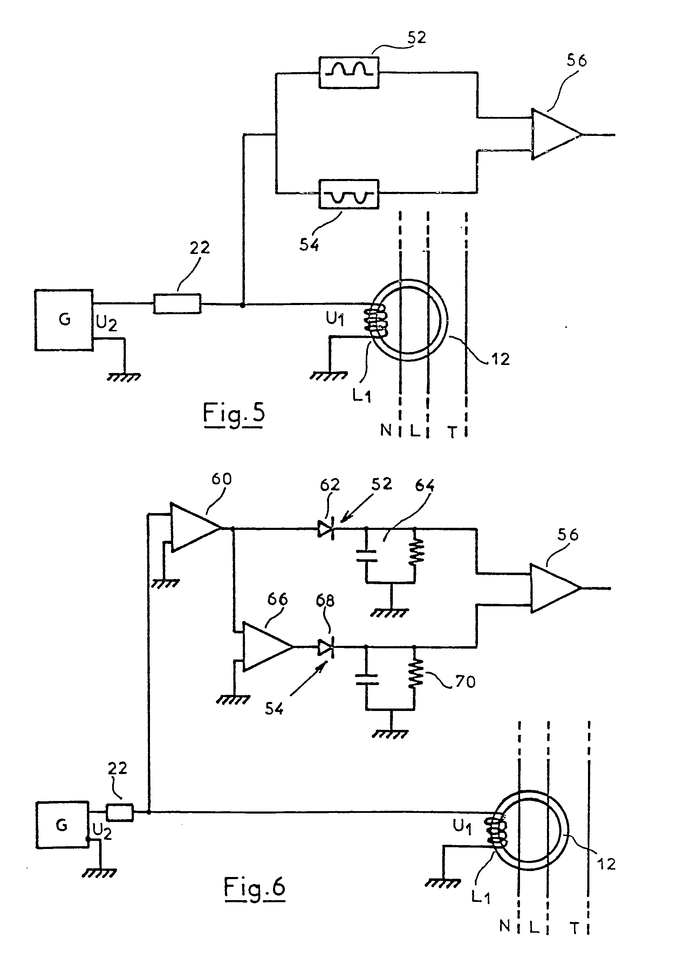

Selon la fig. 5, au lieu de prendre comme référence la tension $U_2$ du générateur G à haute fréquence, il suffit de comparer entre elles les amplitudes des deux alternances positive et négative de la tension $U_1$ aux bornes de l'enroulement secondaire $L_1$, l'une d'elles restant en effet constante en guise de référence. Le générateur G à haute fréquence F délivre comme précédemment un courant pilote constant à l'enroulement $L_1$ du tore 12 de détection. La tension $U_1$ est appliquée à un premier discriminateur 52 d'alternances positives et à un deuxième discriminateur 54 d'alternances négatives dont les sorties sont branchées aux entrées d'un comparateur 56. En l'absence de défaut phase-terre, les deux alternances de la tension $U_1$ sont égales, et aucun signal n'est délivré par le comparateur 56 indépendamment des variations de la perméabilité du tore 12 avec la température. En cas de défaut, les amplitudes des deux alternances sont inégales et le comparateur 56 délivre un signal de déclenchement.

La fig. 6 représente un mode de réalisation du schéma de principe indiqué à la fig. 5. Les mêmes repères seront utilisés pour désigner des composants identiques ou similaires.

La tension $U_1$ aux bornes de l'enroulement $L_1$ du tore 12 est appliquée à un adaptateur d'impédance 60 formé par un amplificateur opérationnel de gain 1. La sortie de l'adaptateur 60 est reliée d'une part au premier discriminateur 52 d'alternances positives constitué par un redresseur à diode 62 et un circuit de filtrage 64, et d'autre part au deuxième discriminateur 54 d'alternances négatives formé par un inverseur de polarité 66 en série avec un redresseur à diode 68 et un circuit de filtrage 70. Les deux tensions redressées et filtrées sont ensuite appliquées aux entrées du comparateur 56 qui délivre en cas de défaut phase-terre alternatif ou continu une tension différentielle de commande de déclenchement. En l'absence de défaut phase-terre, les deux alternances de la tension U₁ sont affectées également par la variation de perméabilité et l'effet de la température est nul comme dans le circuit de la fig. 5.

On remarque que le défaut neutre à la terre qui provoque une variation égale de l'amplitude des deux alternances de la tension U₁ n'est pas détecté par les circuits des fig. 5 ou 6.

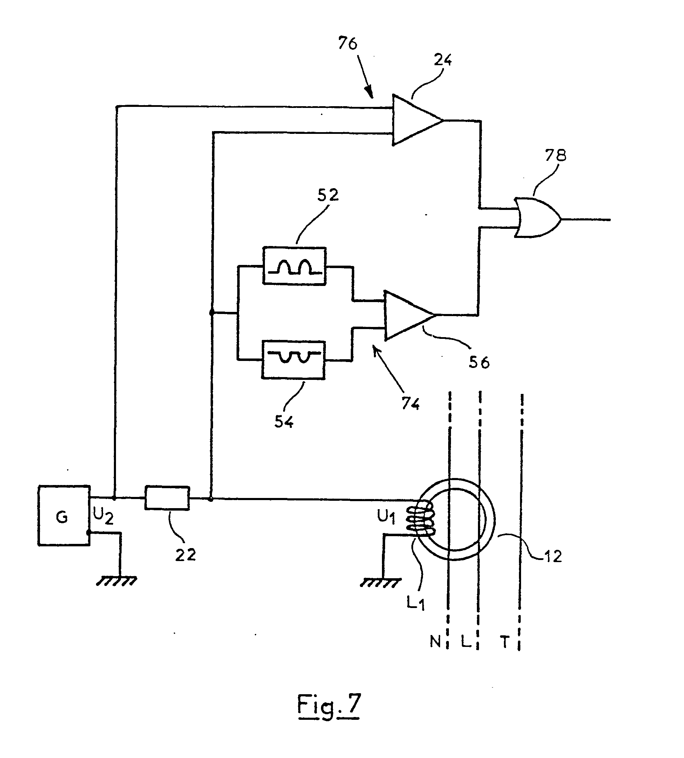

Le dispositif de la fig. 7 complète celui de la fig. 5 en assurant à la fois la détection du défaut neutre à la terre et du défaut phase-terre alternatif ou continu. A partir du circuit pilote formé par le générateur G à haute fréquence, la résistance 22 et le bobinage secondaire L₁ du tore 12, un premier circuit de traitement 74 identique à celui de la fig. 5, compare entre elles les amplitudes des deux alternances de la tension U₁ aux bornes de L₁. Le circuit 74 détecte les défauts phase-terre. Un deuxième circuit de traitement 76 est constitué par le comparateur 24 classique des fig. 1 à 4, qui compare la tension U₁ aux bornes de l'enroulement L₁ avec celle U₂ délivrée par le générateur G. Ce circuit 76 détecte le défaut neutre à la terre. Les deux sorties des comparateurs 24 et 56 sont reliées à un circuit logique OU 78, qui prend en compte les informations en provenance des deux circuits de traitement 74, 76 pour envoyer un ordre de déclenchement en cas d'apparition d'un quelconque défaut phase-terre ou neutre à la terre.

L'invention a été décrite comme s'appliquant à un réseau alternatif monophasé, mais il est évident que les diverses caractéristiques sont également applicables à un réseau multipolaire, notamment triphasé avec neutre.

**Revendications**

1. Dispositif de protection différentielle (10) pour la détection de courants de défaut à la terre dans une installation électrique alimentée par un réseau à courant alternatif et comprenant;

- un transformateur différentiel ayant un noyau magnétique à tore (12) unique traversé par les conducteurs de phase (L) et neutre (N) du réseau formant les enroulements primaires du transformateur,

- un premier enroulement secondaire (L1) bobiné sur le tore (12) et coopérant avec un circuit électronique de mesure et de traitement (14) susceptible de délivrer aprés dépassement d'un seuil prédéterminé, un ordre de déclenchement à une bobine (16) de commande d'un appareil de coupure (18) lors de l'apparition d'un courant de défaut à la terre,

- un circuit (20) auxiliaire d'alimentation du circuit électronique de mesure et de traitement (14),

- un générateur (G) à tension alternative comprenant un oscillateur d'impulsions à fréquence fixe supérieure à celle du réseau, coopérant avec le transformateur différentiel,

- des moyens de comparaison (24, 56) intégrés dans ledit dispositif de mesure et de traitement (14) pour comparer l'amplitude de la tension (U1) aux bornes du premier enroulement secondaire (L1) à une tension de référence,

caractérisé par la combinaison suivante:

- le générateur (G) est relié électriquement au premier enroulement secondaire (L1) au moyen d'un circuit de connexion comportant une résistance (22) dont la valeur est choisie pour imposer un courant pilote d'intensité sensiblement constante,

- un premier comparateur (56) connecté électriquement au premier enroulement secondaire (L1) du tore (12) au moyen d'un premier discriminateur (52) d'alternances positives, et d'un deuxième discriminateur (54) d'alternances négatives de manière à comparer les amplitudes des deux alternances positive et négative de la tension alternative (U1) du premier enroulement secondaire (L1), l'une des alternances étant modifiée lors de l'apparition d'un courant de défaut phase-terre alternatif ou continu pendant que l'autre reste fixe et sert de tension de référence au premier comparateur (56),

- un deuxième comparateur (24) ayant une entrée connectée au premier enroulement secondaire (L1), et une autre entrée branchée à la sortie du générateur (G), ledit deuxième comparateur (24) étant sensible à un défaut neutre à la terre par comparaison des amplitudes de la tension (U1) aux bornes du premier enroulement secondaire (L1), et de la tension (U2) de référence délivrée par le générateur (G).

2. Dispositif de protection différentielle (10) pour la détection de courants de défaut à la terre dans une installation électrique alimentée par un réseau à courant alternatif, et comprenant:

- un transformateur différentiel ayant un noyau magnétique à tore (12) unique traversé par les conducteurs de phase (L) et neutre (N) du réseau formant les enroulements primaires du transformateur,

- un générateur (G) à tension alternative comprenant un oscillateur d'impulsions à fréquence fixe supérieure à celle du réseau, alimentant un premier enroulement secondaire (L1) du transformateur différentiel,

- un deuxième enroulement secondaire (L2) bobiné sur le tore (12) et coopérant avec un circuit électronique de mesure et de traitement (14) susceptible de délivrer après dépassement d'un seuil prédéterminé, un ordre de déclenchement à une bobine (16) de commande d'un appareil de coupure (18) lors de l'apparition d'un courant de défaut à la terre,

- un circuit (20) auxiliaire d'alimentation du circuit électronique de mesure et de traitement (14),

- et des moyens de comparaison (24, 56) intégrés dans ledit dispositif de mesure et de traitement pour comparer l'amplitude de la tension (U1) aux bornes du deuxième enroulement secondaire (L2) à une tension de référence,

caractérisé par la combinaison suivante:

- le générateur (G) est relié électriquement au premier enroulement secondaire (L1) au moyen d'un circuit de connexion comportant une résistance (22) dont la valeur est choisie pour imposer un courant pilote d'intensité sensiblement constante,

- un premier comparateur (56) connecté électriquement au deuxième enroulement secondaire (L2) du tore (12) au moyen d'un premier discriminateur (52) d'alternances positives, et d'un deuxième discriminateur (54) d'alternances négatives de manière à comparer les amplitudes des deux alternances positive et négative de la tension alternative (U1) du deuxième enroulement secondaire (L2), l'une des alternances étant modifiée lors de l'apparition d'un courant de défaut phase-terre alternatif ou continu pendant que l'autre reste fixe, et sert de tension référence au premier comparateur (56),

- un deuxième comparateur (24) ayant une entrée connectée au deuxième enroulement secondaire (L2), et une autre entrée branchée à la sortie du générateur (G), ledit deuxième comparateur (24) étant sensible à un défaut neutre à la terre par comparaison des amplitudes de la tension (U1) aux bornes du deuxième enroulement secondaire (L2), et de la tension (U2) de référence délivrée par le générateur (G).

3. Dispositif de protection différentielle selon la revendication 1 ou 2, caractérisé par le fait que chaque discriminateur (52, 54) d'alternances comporte un redresseur (62, 68) en série avec un circuit de filtrage (64, 70).

4. Dispositif de protection différentielle selon l'une des revendications 1 à 3, caractérisé par le fait que le circuit électronique de mesure et de traitement (14) est doté d'un circuit logique (78) prenant en compte les informations en provenance des premier et deuxième comparateurs (56, 24), de manière à délivrer un ordre de déclenchement après détection soit d'un défaut phase-terre alternatif ou continu, soit d'un défaut neutre à la terre.

**Patentansprüche**

1. Differentialschutzeinrichtung (10) zur Feststellung von geerdeten Fehlerströmen in einer elektrischen Anlage, die von einem Wechselstromnetz gespeist wird, mit:

- einem Differential-Transformator, der einen Magnetkern mit einem einzigen Ringkern (12) aufweist, der von den Phasenleitern (L) und Nulleitern (N) des Netzes durchquert wird, welche die Primärwicklungen des Transformators bilden,

- einer ersten Sekundärwicklung (L1), die auf den Ringkern (12) gewickelt ist, und mit einem elektronischen Mess- und Verarbeitungskreis (14) zusammenarbeitet, welcher nach Ueberschreiten eines vorherbestimmten Wertes einen Auslösebefehl an eine Antriebswelle (16) eines Schaltgerätes (18) abgibt, beim Auftreten eines geerdeten Fehlerstromes,

- einem Hilfs-Versorgungskreis (20) des elektronischen Mess- und Verarbeitungskreises (14),

- einem Wechselspannungs-Generator (G), der einen Impuls-Oszillator mit einer festen Frequenz, die höher als die des Netzes ist, aufweist, und der mit dem Differential-Transformator zusammenarbeitet,

- Vergleichs-Mitteln (24, 56), die in dem genannten Mess- und Verarbeitungskreis (14) integriert sind, um den Ausschlag der Spannung (U1) an den Klemmen der ersten Sekundärwicklung (L1) mit der Bezugsspannung zu vergleichen,

durch die folgende Kombination gekennzeichnet:

- der Generator (G) ist elektrisch mit der ersten Sekundärwicklung (L1) verbunden mittels eines Verbindungsschaltkreises, der einen Widerstand (22) aufweist, dessen Wert so gewählt ist, um einen Steuerstrom von fast konstanter Stärke zu erzwingen,

- ein erster Vergleicher (56) ist elektrisch mit der ersten Sekundärwicklung (L1) des Ringkernes (12) verbunden mittels eines ersten Diskriminators (52) positiver Perioden und eines zweiten Diskriminators (54) negativer Perioden, so um die Grössen der beiden positiven und negativen Perioden der Wechselspannung (U1) der ersten Sekundärwicklung (L1) zu vergleichen, wobei eine der Perioden bei Auftreten eines Gleichoder Wechselstrom-Phasen-Erdfehlers verändert wird, während die andere unverändert bleibt und als Bezugsspannung für den ersten Vergleicher (56) dient,

- ein zweiter Vergleicher (24) besitzt einen Eingang, der mit der ersten Sekundärwicklung (L1) verbunden ist, und einen anderen Eingang, der mit dem Ausgang des Generators (G) verbunden ist, wobei der genannte zweite Vergleicher (24) für einen geerdeten Neutralfehler empfindlich ist, durch Vergleichen der Spannung (U1) an den Klemmen der ersten Sekundärwicklung (L1) und der von dem Generator (G) abgegebenen Bezugsspannung (U2).

2. Differentialschutzeinrichtung (10) zur Feststellung von geerdeten Fehlerströmen in einer elektrischen Anlage, die von einem Wechselstromnetz gespeist wird, mit:

- einem Differential-Transformator, der einen Magnetkern mit einem einzigen Ringkern (12) aufweist, der von den Phasenleitern (L) und Nulleitern (N) des Netzes durchquert wird, welche die Primärwicklungen des Transformators bilden,

- einem Wechselspannungs-Generator (G), der einen Impuls-Oszillator mit einer festen Frequenz, die höher als die des Netzes ist, aufweist, und der eine erste Sekundärwicklung (L1) des Differential-Transformators speist,

- einer zweiten Sekundärwicklung (L2), die auf den Ringkern (12) gewickelt ist und mit einem elektronischen Mess- und Verarbeitungskreis (14) zusammenarbeitet, welcher nach Ueberschreiten eines vorherbestimmten Wertes einen Auslösebefehl an eine Antriebswelle (16) eines Schaltgerätes (18) abgibt, beim Auftreten eines geerdeten Fehlerstromes,

- einem Hilfs-Versorgungsstromkreis (20) des elektronischen Mess- und Verarbeitungskreises (14),

- und Vergleichsmitteln (24, 56), die in dem genannten Mess- und Verarbeitungskreis (14) integriert sind, um den Ausschlag der Spannung (U1) an den Klemmen der zweiten Sekundärwicklung (L2) mit einer Bezugsspannung zu vergleichen,

durch die folgende Kombination gekennzeichnet:

- der Generator (G) ist elektrisch mit der ersten Sekundärwicklung (L1) verbunden mittels eines Verbindungsschaltkreises, der einen Widerstand (22) aufweist, dessen Wert so gewählt ist, um einen Steuerstrom von fast konstanter Stärke zu erzwingen,

- ein erster Vergleicher (56) ist elektrisch mit der zweiten Sekundärwicklung (L2) des Ringkernes (12) verbunden mittels eines ersten Diskriminators (52) positiver Perioden und eines zweiten Diskriminators (54) negativer Perioden, so um die Grössen der beiden positiven und negativen Perioden der Wechselspannung (U1) der zweiten Sekundärwicklung (L2) zu vergleichen, wobei eine der Perioden bei Auftreten eines Gleich- oder Wechselstrom-Phasen-Erdfehlers verändert wird, während die andere unverändert bleibt und als Bezugsspannung für den ersten Vergleicher (56) dient,

- ein zweiter Vergleicher (24) besitzt einen Eingang, der mit der zweiten Sekundärwicklung (L2) verbunden ist, und einen anderen Eingang, der mit dem Ausgang des Generators (G) verbunden ist, wobei der genannte zweite Vergleicher (24) für einen geerdeten Neutralfehler empfindlich ist, durch Vergleichen der Spannung (U1) an den Klemmen der zweiten Sekundärwicklung (L2) und der von dem Generator (G) abgegebenen Bezugsspannung (U2).

3. Differentialschutzeinrichtung gemäss Anspruch 1 oder 2, dadurch gekennzeichnet, dass jeder Perioden-Diskriminator (52, 54) einen mit einem Filterkreis (64, 70) in Serie geschalteten Gleichrichter (62, 68) aufweist.

4. Differentialschutzeinrichtung gemäss einem der Ansprüche 1 bis 3, dadurch gekennzeichnet, dass der Mess- und Verarbeitungskreis (14) mit einem logischen Schaltkreis (78) versehen ist, der die von den ersten und zweiten Vergleichern (56, 24) kommenden Informationen aufnimmt, um einen Auslösebefehl auszusenden, wenn ein Gleich- oder Wechselstrom-Phasen-Erdfehler oder ein Neutral-Erdfehler detektiert wird.

**Claims**

1. Differential protection device (10) for the detection of earthed fault currents in an electrical equipment energized by an alternating current network comprising:
- a differential transformer comprising a magnetic core with a single core (12) crossed by the phase conductors (L) and neutral conductors (N) of the network constituting the primary windings of the transformer,
- a first secondary winding (L1) wound on the core (12) and cooperating with an electronic measuring and processing circuit (14) able to deliver, after exceeding a predetermined threshold, a tripping order to a control coil (16) of a switch device (18) on appearance of an earthed fault current,
- an auxiliary supply circuit (20) of the electronic measuring and processing circuit (14),
- an a.c. voltage generator (G) comprising a pulse oscillator with a stationary frequency, higher than that of the network, cooperating with the differential transformer,
- and comparator means (24, 56) integrated into said measuring and processing circuit (14) in order to compare the amplitude of the voltage (U1) at the terminals of the first secondary winding (L1) with a reference voltage,
characterized by the following combination:
- the generator (G) is connected electrically with the first secondary winding (L1) by means of a connection circuit comprising a resistance (22) the value of which is chosen in such a manner to induce a pilot current of quite constant voltage,
- a first comparator (56) is connected electrically to the first secondary winding (L1) of core (12) by means of a first discriminator (52) of positive alternations, and a second discriminator (54) of negative alternations, in order to compare the amplitudes of both positive and negative alternations of the a.c. voltage (U1) of the first secondary winding (L1), one of the alternations being modified on appearance of an a.c. or d.c. phase-earth fault while the other stays stationary and is used as reference voltage for the first comparator (56),
- a second comparator (24) with an input connected to first secondary winding (L1), and with another input connected to the output of the generator (G), said second comparator (24) being sensitive to a neutral earth fault, by comparison of the amplitudes of the voltage (U1) at the terminals of the first secondary winding (L1) and of the reference voltage (U2) delivered by the generator (G).

2. Differential protection device (10) for the detection of earthed fault currents in an electrical equipment energized by an alternating current network comprising:
- a differential transformer comprising a magnetic core with a single core (12) crossed by the phase conductors (L) and neutral conductors (N) of the network constituting the primary windings of the transformer,
- an a.c. voltage generator (G) comprising a pulse oscillator with a stationary frequency, higher than that of the network, energizing a second secondary winding (L2) of the differential transformer,
- a second secondary winding (L2) wound on the core (12) and cooperating with an electronic measuring and processing circuit (14) able to deliver, after exceeding a predetermined threshold, a tripping order to a control coil (16) of a switch device (18) on appearance of an earthed fault current,
- an auxiliary supply circuit (20) of the electronic measuring and processing circuit (14),

- and comparator means (24, 56) integrated into said measuring and processing circuit (14) in order to compare the amplitude of the voltage (U1) at the terminals of the second secondary winding (L2) with a reference voltage,

characterized by the following combination:

- the generator (G) is connected electrically with the first secondary winding (L1) by means of a connection circuit comprising a resistance (22) the value of which is chosen in such a manner to induce a pilot current of quite constant voltage,

- a first comparator (56) is connected electrically to the second secondary winding (L2) of core (12) by means of a first discriminator (52) of positive alternations, and a second discriminator (54) of negative alternations, in order to compare the amplitudes of both positive and negative alternations of the a.c. voltage (U1) of the second secondary winding (L2), one of the alternations being modified on appearance of an a.c. or d.c. phase-earth fault while the other stays stationary and is used as reference voltage for the first comparator (56),

- a second comparator (24) with an input connected to second secondary winding (L2), and with another input connected to the output of the generator (G), said second comparator (24) being sensitive to a neutral earth fault, by comparison of the amplitudés of the voltage (U1) at the terminals of the second secondary winding (L2) and of the reference voltage (U2) delivered by the generator (G).

3. Differential protection device according to claim 1 or 2, characterized by the fact that each alternation discriminator (52, 54) comprises a rectifier (62, 68) in series with a filter circuit (64, 70).

4. Differential protection device according to one of the claims 1 to 3, characterized by the fact that the electronic measuring and processing circuit (14) comprises a logic circuit (78) taking into account the information providing from the first and second comparators (56, 24) in order to deliver a tripping order after detection of an a.c. or d.c. phase-earth fault or of a neutral earth fault.

Fig.1

Fig.2

1

Fig. 3

Fig. 4

Fig.5

Fig.6

Fig.7

Instant de ·
défaut

a) Tension $U_2$ ( oscillateur ) fréqence F

b) Tension $U_1$ (enroulement tore) défaut continu Phase Terre

c) Tension différentielle $\Delta U = U_1 - U_2$ défaut continu Phase Terre

d) Tension $\Delta U$ défaut alternatif 50 Hz Phase Terre

changement d'impédance
$Z_0$ devient $Z \times (\frac{M_2}{M_1})^2$

e) Tension $\Delta U$ défaut Neutre Terre

Fig. 8

5